# EUROPEAN PATENT APPLICATION

(11) **EP 4 832 169 A1**
(43) Date of publication of application: **28.10.2026**
(21) Application number: 26156761.4
(22) Date of filing: 05.02.2026
(51) Int. Cl.: H01M 10/613, H01M 10/625, H01M 10/6556, H01M 50/271, H01M 50/367

(54) **SECONDARY BATTERY MODULE AND METHOD OF MANUFACTURING THE SAME**

(30) Priority: 21.04.2025 KR 20250051876
(71) Applicant: SAMSUNG SDI CO., LTD., Yongin-si, Gyeonggi-do 17084 (KR)
(72) Inventor: DONGHYEONG, Kim, 17084 YONGIN-SI (KR)
(74) Representative: Regimbeau

(57) **Abstract**

Disclosed are a secondary battery module and a method of manufacturing the secondary battery module. The secondary battery module includes a housing (100) configured to accommodate a plurality of secondary batteries (90), busbars (210, 220) configured to electrically connect the plurality of secondary batteries (90) in the housing (100), a first cooling channel (310) and a second cooling channel (320) formed to come into thermal contact with the respective busbars (210, 220) and configured to absorb heat from the busbars, and a housing cover (400) integrally formed with the first cooling channel (310) and the second cooling channel (320), and configured to cover an upper portion of the housing.

## Description

### TECHNICAL FIELD

The present disclosure relates to a secondary battery module and a method of manufacturing the secondary battery module, and more particularly, to a secondary battery module including a cooling channel that is integrally formed with a housing cover to improve cooling performance, and a method of manufacturing the secondary battery module.

### BACKGROUND

Unlike primary batteries that are not designed to be charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage. The secondary battery includes an electrode assembly consisting of a positive electrode and a negative electrode, a case that accommodates the electrode assembly, a terminal part connected to the electrode assembly, etc.

A plurality of such secondary batteries may be combined to form a secondary battery module, and a plurality of secondary battery modules may be assembled to constitute a secondary battery pack. In order to maintain the performance and stability of the secondary battery, the reliability of electrical connection and cooling performance may be important.

However, in conventional secondary battery modules, cooling structures capable of effectively dissipating heat generated from a busbar are unsatisfactory.

In general cooling methods, cooling using air that does not come into direct contact with the busbar or a method of adding a separate cooling component has been used. However, such methods may have limited cooling performance, may complicate an assembly process, and may increase the overall volume and weight of a system.

The above information disclosed in this Background section is for enhancement of understanding of the background of the present disclosure, and therefore, it may contain information that does not constitute related (or prior) art.

### SUMMARY

Embodiments of the present disclosure are directed to providing a secondary battery module and a secondary battery pack which are configured such that a cooling channel that is integrally formed with a housing cover is in thermal contact with a busbar, thereby providing improved cooling performance.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

A secondary battery module according to embodiments of the present disclosure may include a housing configured to accommodate a plurality of secondary batteries, busbars configured to electrically connect the plurality of secondary batteries in the housing, a first cooling channel and a second cooling channel formed to come into thermal contact with the respective busbars and configured to absorb heat from the busbars, and a housing cover integrally formed with the first cooling channel and the second cooling channel, and configured to cover an upper portion of the housing.

In embodiments, each of the first and second cooling channels may be formed by a rib structure protruding from a lower portion of the housing cover.

In embodiments, each of the first and second cooling channels may include a cooling flow passage through which cooling fluid flows.

In embodiments, the first cooling channel and the second cooling channel may include respective inlets and respective outlets that are alternately arranged.

In embodiments, the housing cover may include at least one tunnel portion bent outward. In embodiments, the tunnel portion may be formed above a cell vent region in the housing, and may form a space between the cell vent region and the housing cover.

In embodiments, the tunnel portion may be formed between the first cooling channel and the second cooling channel, and may include a side portion formed to be inclined.

In embodiments, the busbars and the first and second cooling channels may include an insulator configured to provide electrical insulation therebetween.

In embodiments, the insulator may include a first insulating layer formed on an entire inner surface of the housing cover including the first and second cooling channels, and a second insulating layer formed between the first insulating layer and the busbars and made of a heat transfer material.

A secondary battery pack according to embodiments of the present disclosure may include a plurality of secondary battery modules that each have the same structure as the above-mentioned secondary battery module and are arranged in parallel, and a plurality of cooling channels arranged in parallel in correspondence with the plurality of secondary battery modules.

A method of manufacturing a secondary battery module according to embodiments of the present disclosure may include providing a housing that accommodates a plurality of secondary batteries, arranging busbars that electrically connect the plurality of secondary batteries in the housing, forming a first cooling channel and a second cooling channel that are in thermal contact with the respective busbars, and coupling a housing cover to an upper portion of the housing, the housing cover being integrally formed with the first cooling channel and the second cooling channel.

In embodiments, each of the first and second cooling channels may be formed using a rib structure protruding from a lower portion of the housing cover.

In embodiments, each of the first and second cooling channels may include a cooling flow passage through which cooling fluid flows.

In embodiments, the forming of the first cooling channel and the second cooling channel may include forming the first cooling channel and the second cooling channel such that respective inlets and respective outlets are alternately arranged.

In embodiments, the method may further include forming the housing cover such that at least one tunnel portion bent outward is included in the housing cover.

In embodiments, the tunnel portion may be formed to be disposed above a cell vent region in the housing.

In embodiments, the tunnel portion may be formed between the first cooling channel and the second cooling channel, and may include a side portion formed to be inclined.

In embodiments, the method may further include disposing an insulator such that the busbars and the first and second cooling channels are electrically insulated from each other. In embodiments, the disposing of the insulator may include forming a first insulating layer on an entire inner surface of the housing cover including the first and second cooling channels, and disposing a second insulating layer between the first insulating layer and the busbars, the second insulating layer being made of a heat transfer material.

In embodiments, the plurality of secondary battery modules may be arranged in parallel, and the plurality of cooling channels may be formed in parallel in correspondence with the plurality of the secondary battery modules.

According to embodiments of the present disclosure, a cooling channel integrally formed with a housing cover may be configured to be in thermal contact with a busbar, thereby improving cooling performance of a secondary battery module.

Furthermore, according to embodiments of the present disclosure, an insulator may be disposed between the cooling channel and the busbar, thereby enabling heat transfer while maintaining electrical insulation, and thus improving the reliability of the secondary battery module.

In addition, according to embodiments of the present disclosure, as a plurality of secondary battery modules are arranged in parallel, cooling channels may also be configured to be formed in parallel so that the overall cooling performance of a secondary battery pack can be uniformly maintained. The foregoing configuration may prevent overheating in specific modules, improve the overall performance and durability of the secondary battery pack, and maintain high reliability.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate preferred embodiments of the present disclosure, and help to further understand the technical features of the present disclosure along with the aforementioned contents of the disclosure. Accordingly, the present disclosure should not be construed as being limited to only contents described in such drawings:
FIG. 1 is a top perspective view illustrating a prismatic secondary battery;
FIG. 2 is a sectional view taken along line I-I of FIG. 1;
FIG. 3 is a schematic view illustrating a secondary battery module according to embodiments of the present disclosure;
FIG. 4 is a front view illustrating a housing cover of a secondary battery module according to embodiments of the present disclosure;
FIG. 5 is a perspective view illustrating a housing cover of a secondary battery module according to embodiments of the present disclosure;
FIG. 6 is a front view illustrating the housing cover of FIG. 5;
FIG. 7 is a schematic view illustrating a secondary battery module including the housing cover of FIG. 5 according to embodiments;
FIG. 8 is a perspective view illustrating a housing cover of a secondary battery module according to embodiments of the present disclosure;
FIG. 9 is a front view illustrating the housing cover of FIG. 8;
FIG. 10 is a perspective view illustrating a housing cover of a secondary battery pack according to embodiments of the present disclosure;
FIG. 11 is a flowchart for describing a method of manufacturing a secondary battery module according to embodiments of the present disclosure;
FIG. 12 is a view illustrating an example of a secondary battery module in which secondary batteries are arranged according to embodiments of the present disclosure;
FIG. 13 is a view illustrating an example of a secondary battery pack including the secondary battery module illustrated in FIG. 12; and
FIG. 14 is a conceptual view illustrating a vehicle including the secondary battery pack illustrated in FIG. 13.

### DETAILED DESCRIPTION

Exemplary embodiments of the present disclosure will be described below in detail with reference to the accompanying drawings. Prior to the description, it is noted that the terms or words used in this specification and claims should not be construed as being limited to common or dictionary meanings but instead should be understood to have meanings and concepts in agreement with the present disclosure based on the principle that an inventor can define the concept of each term suitably in order to describe his/her own invention in the best way possible. Accordingly, since the embodiments described in this specification and the configurations illustrated in the drawings are only an example of the present disclosure and they do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplary embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween. As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of exemplary embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

The present invention will be described in detail with reference to the attached drawings. Examples of secondary batteries include a coin type, a cylindrical type, a prismatic type, and a pouch type. The present disclosure is basically applicable to a prismatic secondary battery. Therefore, the prismatic secondary battery will first be briefly described prior to description of embodiments of the present disclosure.

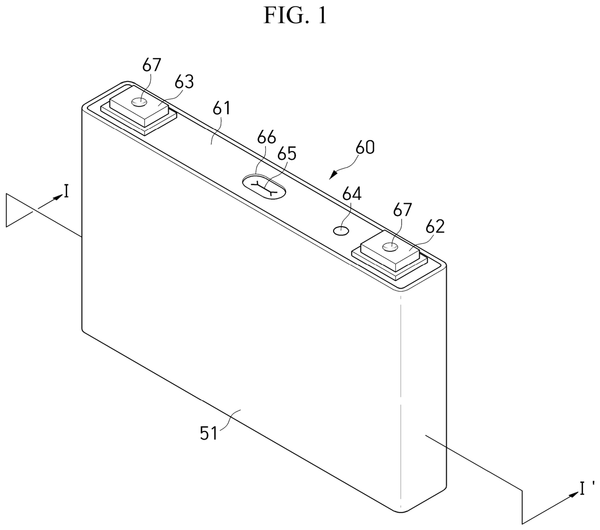

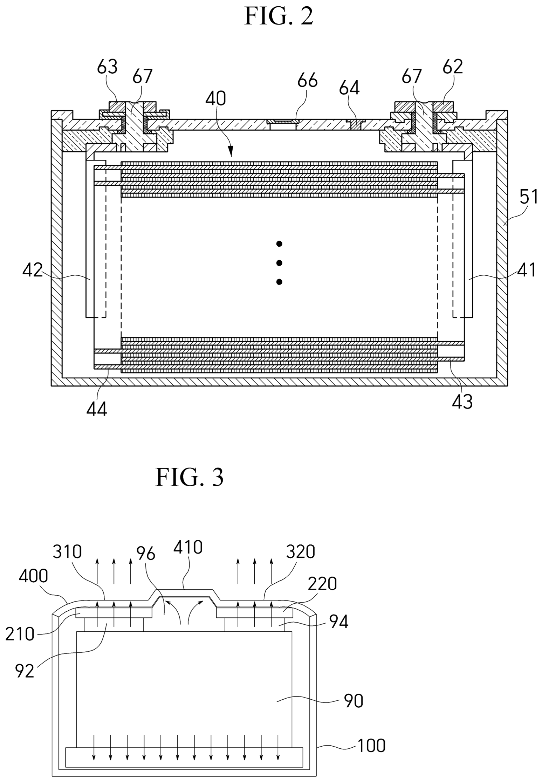

FIG. 1 is a top perspective view of the prismatic secondary battery. FIG. 2 is a cross-sectional view taken along line I-I' of FIG. 1.

First, the external appearance of the prismatic secondary battery illustrated in FIG. 1 will be described.

A casing 51 defines an overall appearance of the prismatic secondary battery, and may be made of conductive metal, such as aluminum, aluminum alloy, or nickel-plated steel. In addition, the casing 51 may provide a space for accommodating an electrode assembly therein.

A cap assembly 60 may include a cap plate 61 that covers the opening of the casing 51, and the cap assembly 60 and the cap plate 61 may be made of a conductive material. Here, a first terminal 63 and a second terminal 62 may be electrically connected to respective positive and negative (or negative and positive) electrodes inside the casing, and may be installed to protrude outward through the cap plate 61.

The cap plate 61 may be equipped with an electrolyte injection port 64 formed to install a sealing plug, and a vent 66 formed with a notch 65. The vent 66 is for degassing the secondary battery, i.e., for discharging gas generated inside the secondary battery.

With reference to FIG. 2, the internal structure of the prismatic secondary battery and the coupling structure with the cap assembly 60 will be described.

As illustrated in FIG. 2, the prismatic secondary battery may basically include an electrode assembly 40, a first current collector part 41, a first terminal 62, a second current collector part 42, a second terminal 63, and a cap assembly 60.

The electrode assembly 40 may be formed by winding or stacking a laminate of a first electrode plate, a separator, and a second electrode plate, which are in the form of a plate or a film. When the electrode assembly 40 is a wound laminate, it may have a winding axis parallel to the longitudinal direction of the casing. The electrode assembly 40 may be of a stack type rather than a winding type, but the shape of the electrode assembly 40 is not limited in the present disclosure. In addition, the electrode assembly 40 may be a Z-stack electrode assembly in which a first electrode plate and a second electrode plate are inserted into both sides of a separator bent into a Z-stack. Furthermore, the electrode assembly 40 may consist of one or more electrode assemblies, which are stacked such that their long sides are adjacent to each other and accommodated in the casing, and the number of electrode assemblies is not limited in the present disclosure. The electrode assembly 40 may have a first electrode plate that acts as a negative electrode and a second electrode plate that acts as a positive electrode, or vice versa.

The first electrode plate may be formed by applying a first electrode active material, such as graphite or carbon, to a first electrode current collector plate made of metal foil, such as copper, copper alloy, nickel, or nickel alloy. The first electrode plate may include a first electrode tab (or first uncoated part) 43, which is a region without application of the first electrode active material. The first electrode tab 43 may act as a current flow passage between the first electrode plate and the first current collector part 41. In some examples, the first electrode tab 43 may be formed by cutting the first electrode plate to protrude to one side in advance when manufacturing the first electrode plate, and may protrude further to one side than the separator without separate cutting.

The second electrode plate may be formed by applying a second electrode active material such as transition metal oxide to a substrate made of metal foil, such as aluminum or aluminum alloy. The second electrode plate may include a second electrode tab (or second uncoated part) 44, which is a region without application of the second electrode active material. The second electrode tab 44 may act as a current flow passage between the second electrode plate and the second current collector part 42. In some examples, the second electrode tab 44 may be formed by cutting the second electrode plate to protrude to the other side in advance when manufacturing the second electrode plate, and may protrude further to the other side than the separator without separate cutting.

In some embodiments, the first electrode tab 43 may be located on the right end side of the electrode assembly 40, and the second electrode tab 44 may be located on the left end side of the electrode assembly 40. Alternatively, the first electrode tab 43 and the second electrode tab 44 may be located on one end side of the electrode assembly 40 in the same direction. Here, the left and the right are represented based on the secondary battery illustrated in FIG. 1 for convenience of explanation, and they may change in position when the secondary battery is rotated left and right or up and down.

The separator functions to prevent a short circuit between the first electrode plate and the second electrode plate while permitting migration of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate extend from both ends of the electrode assembly 40 as described above, respectively. In some embodiments, the electrode assembly 40 may be accommodated together with an electrolyte in the casing 51.

In the electrode assembly 40, the first current collector part 41 and the second current collector part 42 may be welded and connected to the first electrode tab 43 extending from the first electrode plate and the second electrode tab 44 extending from the second electrode plate, respectively.

The first current collector part 41 and the second current collector part 42 are connected to the first terminal 62 and the second terminal 63, as described with reference to FIG. 1, through terminal pins 67, respectively. In some embodiments, the terminal pins 67 may each have an outer peripheral surface that is threaded, and may be fastened to the first terminal 62 and the second terminal 63 by screwing. However, the present disclosure is not limited thereto. For example, the terminal pins 67 may also be coupled to the first terminal 62 and the second terminal 63 by riveting or welding.

FIG. 3 is a schematic view illustrating a secondary battery module according to embodiments of the present disclosure, and arrows in FIG. 3 indicate the flow of heat transfer.

Referring to FIG. 3, a secondary battery module according to embodiments of the present disclosure may include a housing 100 that accommodates a plurality of secondary batteries 90, busbars 210 and 220 including a positive busbar 210 and a negative busbar 220 that electrically connect the plurality of secondary batteries 90 in the housing 100, a first cooling channel 310 and a second cooling channel 320 that are formed to be in thermal contact with the respective busbars 210 and 220 to absorb heat from the busbars 210 and 220, and a housing cover 400 that is integrally formed with the first cooling channel 310 and the second cooling channel 320 and configured to cover an upper portion of the housing 100.

According to embodiments of the present disclosure, the secondary battery module may include the housing 100 including the plurality of secondary batteries 90, the busbars 210 and 220 that electrically connect the plurality of secondary batteries 90, the first cooling channel 310 and the second cooling channel 320 that are in thermal contact with the busbars 210 and 220 to perform heat transfer, and the housing cover 400 that is integrally formed with the cooling channels 310 and 320 and covers the upper portion of the housing 100.

The housing 100 according to embodiments of the present disclosure may be formed to accommodate the plurality of secondary batteries 90 therein, and may protect the secondary batteries 90 and secure internal components in place. The housing 100 may be made of metal or a high-strength composite material. The plurality of secondary batteries 90 may be arranged inside the housing 100. Each of the secondary batteries 90 may include a positive tab 92 and a negative tab 94 that respectively include a positive electrode and a negative electrode.

According to embodiments of the present disclosure, the positive busbar 210 and the negative busbar 220 may be conductive structures configured to electrically connect the secondary batteries 90 to each other. The positive busbar 210 may be electrically connected to the respective positive tabs 92 of the secondary batteries 90, and the negative busbar 220 may be electrically connected to the respective negative tabs 94 of the secondary batteries 90. The busbars 210 and 220 may be formed of a metallic material such as aluminum or copper to facilitate current flow, and may be formed to minimize electrical resistance.

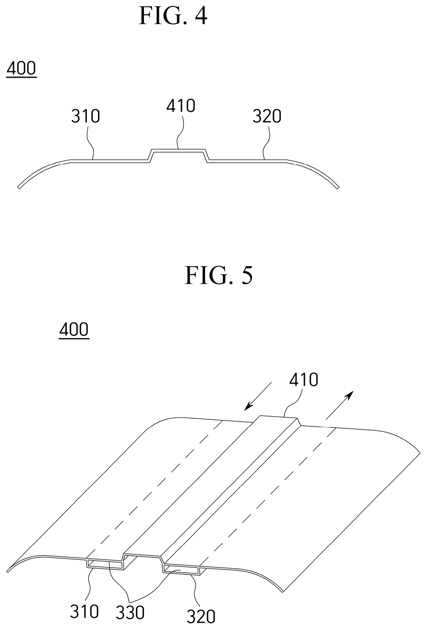

Referring to FIGS. 4 to 10, the first cooling channel 310 and the second cooling channel 320 according to embodiments of the present disclosure may be in thermal contact with the positive busbar 210 and the negative busbar 220, respectively, to absorb heat generated from the busbars 210 and 220. Each cooling channel may be formed as a structure capable of performing heat transfer (see FIGS. 4, 8, and 9) or may be formed to allow cooling fluid to flow therein, and may include a cooling flow passage 330 for the flow of fluid (see FIGS. 5, 6, and 7). The cooling fluid may be water or a coolant, and an inlet and an outlet may be respectively formed to control the flow of fluid. The cooling channel may be integrally formed with the housing cover 400 and may be made of metal or a thermally conductive material.

Each cooling channel according to embodiments of the present disclosure may be formed with a rib structure protruding from a lower portion of the housing cover 400.

The cooling channel may be in thermal contact with the busbar to absorb heat generated from the busbar and serve to dissipate the heat using a cooling fluid. The cooling channel may be formed inside or on the lower portion of the housing cover 400, and may have a structure in thermal contact with the busbar or may be configured such that the cooling fluid flows along a flow passage.

The rib structures may be formed to protrude from the lower portion of the housing cover 400. Each rib structure may serve to form a wall of the corresponding cooling channel. The rib structures may be arranged with a constant distance and positioned to allow the cooling fluid to flow smoothly. The rib structures may protrude from a lower surface of the housing cover 400 with a constant height and each may form the corresponding cooling flow passage 330 through which the cooling fluid flows.

The rib structures may be made of metal or a composite material and may be integrally formed with the housing cover 400. In the case where a metallic material is used, the rib structures may have high thermal conductivity and may be in direct contact with the busbars and rapidly absorb heat. Furthermore, the rib structures may serve to reinforce the rigidity of the cooling channels and protect the cooling channels from external impacts or deformation.

As the rib structures according to embodiments of the present disclosure are used to form the cooling channels, a cooling function may be implemented integrally with the housing cover without the need to add a separate cooling structure. The foregoing configuration may simplify the structure of a system and reduce the number of components, thus achieving reduction in production cost and weight. In addition, the rigidity of the cooling channels may be enhanced by the rib structures.

FIG. 4 is a front view illustrating a housing cover 400 of a secondary battery module according to embodiments of the present disclosure. Referring to FIG. 4, the first cooling channel 310 and the second cooling channel 320 have a structure capable of being in direct thermal contact with the busbars to perform heat transfer.

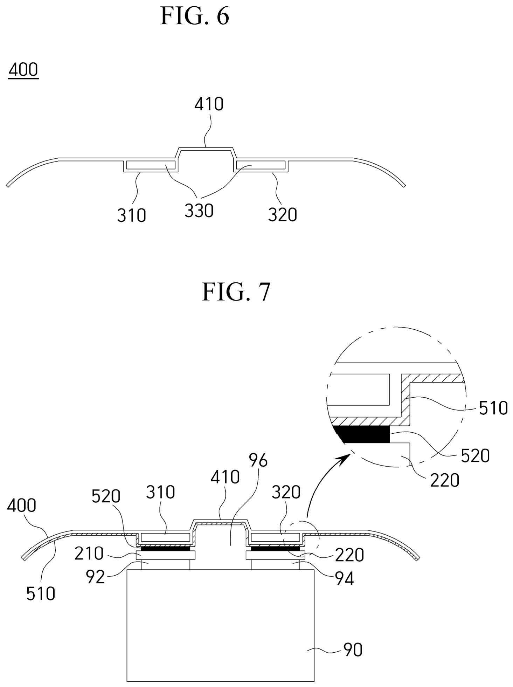

FIGS. 5 and 6 are respectively a perspective view and a front view illustrating a housing cover of a secondary battery module according to embodiments of the present disclosure.

FIG. 7 is a schematic view illustrating a secondary battery module including the housing cover of FIGS. 5 and 6 according to embodiments.

Referring to FIGS. 5 to 7, each cooling channel according to embodiments of the present disclosure may include a cooling flow passage 330 that is formed to allow cooling fluid to flow therein.

The cooling channel may be integrally formed with the housing cover 400, and may serve to remove heat generated from the plurality of secondary batteries 90 using the cooling fluid. The cooling channel may be formed on the lower portion of the housing cover 400, and the cooling flow passage 330 may be provided in the cooling channel to allow the cooling fluid to flow. The cooling flow passage 330 may have a constant width and depth, and may be formed to allow the cooling fluid to circulate efficiently. In the secondary battery module according to embodiments of the present disclosure, a bottom cooling plate may be formed at the bottom of each secondary battery.

The cooling channel according to embodiments of the present disclosure may be formed in various shapes, such as a linear shape, a curved shape, or a branched shape, and in any case, the cooling channel may be formed such that a contact area between the cooling channel and the busbar is maximized. To minimize flow resistance of the cooling fluid, an inner surface of the cooling flow passage 330 may be processed to be smooth, and a guide structure for preventing turbulence of the fluid may also be added.

The cooling fluid may flow along the cooling flow passage 330 and may absorb and dissipate heat by being in thermal contact with the busbars and the housing cover 400. Various types of fluids, such as water, cooling oil, or refrigerant, may be used as the cooling fluid, and may be selected according to system requirements. The cooling fluid may circulate along the cooling flow passage 330 and may also be connected to an external cooling system.

In this way, as the cooling flow passage may be formed in the cooling channel according to embodiments of the present disclosure, a structure in which the cooling fluid can directly flow may be implemented. Due to the aforementioned configuration, heat generated from the plurality of secondary batteries may be effectively removed, and cooling performance may be enhanced.

In the first cooling channel 310 and the second cooling channel 320 according to embodiments of the present disclosure, inlets and outlets may be alternately arranged.

The first cooling channel 310 and the second cooling channel 320 may each be integrally formed with the housing cover 400, and may provide cooling passages for effectively absorbing and dissipating heat generated from the plurality of secondary batteries 90. The cooling fluid may flow along the cooling flow passage 330 provided in each of the first cooling channel 310 and the second cooling channel 320, and may absorb heat by coming into contact with the busbars. In this case, to allow the cooling fluid to circulate effectively, the inlets and the outlets of the first cooling channel 310 and the second cooling channel 320 may be alternately arranged.

As the inlets and the outlets for the cooling fluid are alternately arranged, a cooling fluid flow structure may be designed such that the cooling fluid flows in opposite directions.

The foregoing configuration may allow heat exchange to occur uniformly and may prevent localized temperature increases in specific areas. In addition, the alternately-arranged inlets and outlets may contribute to reducing fluid flow resistance in the overall cooling flow passage 330 and to ensuring uniform cooling performance.

In embodiments, the inlet of the first cooling channel 310 may be disposed at one end of the secondary battery module, and the outlet thereof may be disposed at the opposite end. In contrast, the inlet of the second cooling channel 320 may be disposed on the same side as the outlet of the first cooling channel 310, and the outlet of the second cooling channel 320 may be disposed on the same side as the inlet of the first cooling channel 310. Due to the foregoing configuration, the flows of cooling fluid in the first cooling channel 310 and the second cooling channel 320 may be formed in opposite directions, thereby allowing heat to be distributed uniformly.

Accordingly, according to embodiments of the present disclosure, as the inlets and the outlets of the first cooling channel and the second cooling channel are alternately arranged, the flow of the cooling fluid may be maintained uniformly, and localized overheating may be prevented. In addition, flow resistance of the cooling fluid may be minimized, and heat exchange performance may be improved.

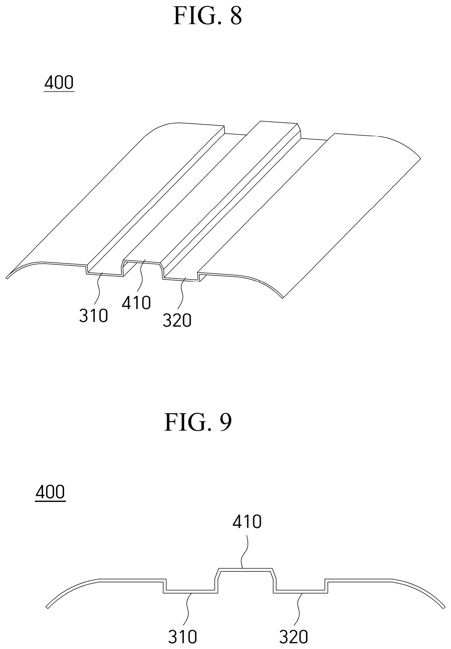

FIG. 8 is a perspective view illustrating a housing cover 400 of a secondary battery module according to embodiments of the present disclosure. FIG. 9 is a front view illustrating the housing cover 400 of FIG. 8. Referring to FIGS. 8 and 9, the first cooling channel 310 and the second cooling channel 320 may form a structure that is in direct thermal contact with the busbars to perform heat transfer, and may be formed as rib structures to reinforce rigidity.

In embodiments of FIG. 4, the cooling channel may be formed in a planar shape and be in direct thermal contact with the busbars to perform heat transfer. In embodiments of FIGS. 5 to 7, the cooling channel may be formed as a rib structure in the shape of the cooling flow passage 330 and may be in direct thermal contact with the busbars to perform heat transfer. In embodiments of FIGS. 8 and 9, the cooling channel may be formed as a rib structure configured to be in direct thermal contact with the busbars to perform heat transfer.

The housing cover 400 according to embodiments of the present disclosure may be formed to cover an upper portion of the housing 100, and may be integrally formed with the first cooling channel 310 and the second cooling channel 320. The housing cover 400 may protect internal components from external impacts and form an integrated structure through coupling with the cooling channels. A portion of the housing cover 400 may have a tunnel-shaped structure, which serves to provide space for a cell vent region 96. Furthermore, the housing cover 400 may be integrally formed with the cooling channels to efficiently remove heat generated from the busbars.

According to embodiments of the present disclosure, the housing cover 400 may include at least one tunnel portion 410 bent outward.

The housing cover 400 according to embodiments of the present disclosure may cover the secondary battery module and serve to protect components inside the housing 100. The housing cover 400 may be formed of metal or a composite material, taking into account durability and thermal conductivity. Furthermore, the housing cover 400 may be in contact with a busbar assembly to perform heat transfer, and may be manufactured as an integrated structure to improve the cooling performance within the module.

The tunnel portion 410 may have a shape bent outward from the housing cover 400, and may have a structural feature of forming a space therein. In other words, the tunnel portion 410 may serve to provide an internal space in a specific region. The tunnel portion 410 may be integrally fabricated through a forming process, and a plurality of tunnel portions 410 may be arranged at regular intervals.

In embodiments, the tunnel portion 410 may be disposed to correspond to the cell vent region 96 of the secondary battery module. As the tunnel portion 410 is formed above the cell vent region 96, a space for discharging gas generated from battery cells may be secured. Furthermore, the tunnel portion 410 may be formed in association with the cooling channels, and may enhance the heat dissipation effect in association with the flow passages through which the cooling fluid flows.

Accordingly, as the housing cover is formed to include at least one tunnel portion bent outward according to embodiments of the present disclosure, the structural rigidity of the secondary battery module may be enhanced, and the internal space may be utilized efficiently. In addition, a battery gas discharge passage may be formed in association with the cell vent region, and the cooling performance may be improved.

The tunnel portion 410 according to embodiments of the present disclosure may be formed above the cell vent region 96 in the housing 100, and may form a space between the cell vent and the housing cover 400.

The tunnel portion 410 may include a structure bent outward from the housing cover 400, and may be formed with a constant height. The tunnel portion 410 may be disposed to correspond to the cell vent region 96 of the secondary batteries 90 arranged in the housing 100, thereby forming a space between the cell vent and the housing cover 400. The space may provide a passage, through which gas generated from the cell vent can be discharged to the outside, and may effectively relieve pressure generated inside the battery cells.

In embodiments, the tunnel portion 410 may be integrally formed with the housing cover 400, and may be disposed in such a way as to cover the cell vent region 96. The shape of the tunnel portion 410 may vary depending on design conditions, and may be designed to have a specific height and width. For example, the height of the tunnel portion 410 may be optimized in consideration of the structure of the cell vent and the amount of internal gas discharged. The width of the tunnel portion 410 may be adjusted depending on the size and arrangement structure of the module. Furthermore, the tunnel portion 410 may include an additional reinforcing rib therein, thereby increasing structural rigidity. Accordingly, as the tunnel portion according to embodiments of the present disclosure is formed above the cell vent region in the housing and a space is thus formed between the cell vent and the housing cover, a passage through which gas generated from the cell vent can be efficiently discharged may be secured. As a result, the internal pressure of the battery may be maintained at a constant level, and the risk of explosion or overheating may be reduced. Furthermore, because gas can be smoothly discharged through the tunnel portion, the overall stability of the secondary battery module may be improved.

The tunnel portion 410 according to embodiments of the present disclosure may be formed between the first cooling channel 310 and the second cooling channel 320. Side portions of the tunnel portion 410 may be formed to be inclined.

The tunnel portion 410 may include a structure bent outward from the housing cover 400, and may be disposed above the cell vent region 96 in the housing 100. The tunnel portion 410 may be formed to be positioned between the first cooling channel 310 and the second cooling channel 320. The position at which the tunnel portion 410 is formed may be set to maintain the space between the cell vent and the housing cover 400 without interfering with the heat transfer paths of the cooling channels.

The side portions of the tunnel portion 410 may be formed to be inclined, and an inclination angle may be determined in consideration of the geometric characteristics of the housing cover 400 and the structural stability of the internal space. The inclined structure of the side portions of the tunnel portion 410 may be formed to enable smooth gas discharge, so that gas discharged from the cell vent may move smoothly to the outside without interference with the housing cover 400. Furthermore, the inclined structure may assist in maintaining the rigidity of the tunnel portion 410 and may serve to reinforce the tunnel portion 410 to prevent deformation of the tunnel portion 410 even under external impact or pressure variations.

In embodiments, the width and height of the tunnel portion 410 may be designed to prevent interference with the cooling channels and to improve gas discharge efficiency. The inclination of the side portions of the tunnel portion 410 may be formed at an appropriate angle in consideration of the connection with the cooling channels and the thickness of the housing cover 400, and may generally be set within a range from approximately 15 degrees to approximately 45 degrees. Furthermore, a plurality of tunnel portions 410 may be repeatedly arranged at regular intervals, thereby increasing the overall structural strength of the housing cover 400 and simultaneously controlling dissipation of heat and discharge of gas from the battery cells.

Accordingly, as the tunnel portion according to embodiments of the present disclosure is disposed between the first cooling channel and the second cooling channel and the side portions of the tunnel portion are formed to be inclined, gas generated from the battery cells may be discharged more efficiently. Furthermore, the inclined structure may minimize interference with the cooling channels and maintain the rigidity of the housing cover, thereby improving the durability and safety of the secondary battery module.

According to embodiments of the present disclosure, the positive busbar 210, the negative busbar 220, and the cooling channels may include an insulator to achieve electrical insulation.

The positive busbar 210 and the negative busbar 220 may serve to electrically connect the plurality of secondary batteries 90 in the housing 100 in the positive and negative electrode directions, respectively. The positive busbar 210 and the negative busbar 220 may be made of conductive metal, and may be in contact with the battery cells and function to transmit power. However, if the positive busbar 210 or the negative busbar 220 comes into direct contact with the corresponding cooling channel, there may be a risk of an electrical short circuit. Accordingly, the insulator configured to provide electrical insulation is required to prevent such a short circuit.

The cooling channels may be formed to be in thermal contact with the positive busbar 210 and the negative busbar 220, respectively, and may serve to absorb heat generated from the busbars. The cooling channels may be made of a metallic material, and each may include the cooling flow passage 330 through which cooling fluid flows. In the present disclosure, the insulator may be included so that electrical insulation may be maintained even while the cooling channel is in direct contact with the busbar.

The insulator may be interposed between each of the positive busbar 210 and the negative busbar 220 and the corresponding cooling channel to ensure electrical insulation therebetween. The insulator may be made of a non-conductive material, and may include insulating materials, such as polyimide, ceramic coating, or epoxy resin, which generally exhibit excellent heat resistance and durability. Furthermore, the insulator may be attached to an entire inner surface of the housing cover 400 including the cooling channels, or may be interposed between the cooling channels and the busbars. The insulator may be designed to have an appropriate thickness and thermal conductivity so as not to hinder heat transfer from the positive busbar 210 and the negative busbar 210.

In embodiments, the insulator may be formed on an inner surface of the housing cover 400 including the cooling channels, and may include an insulating layer having a multilayer structure. Furthermore, the insulator may be partially disposed only at specific locations, and a contact area with each cooling channel may be adjusted to further increase the heat transfer efficiency.

According to embodiments of the present disclosure, as the insulator is included, the busbars and the cooling channels may be electrically insulated from each other while maintaining heat transfer paths. The foregoing configuration may improve the electrical stability of the secondary battery module, prevent accidents due to short circuits, and ensure insulation while maximizing cooling performance.

According to embodiments of the present disclosure, in the insulator, a first insulating layer 510 may be formed on the entire inner surface of the housing cover 400 including the cooling channels, and a second insulating layer 520 made of a heat transfer material may be formed between the first insulating layer 510 and each busbar.

The insulator may include the first insulating layer 510 formed on the entire inner surface of the housing cover 400, and the second insulating layer 520 interposed between the first insulating layer 510 and each busbar. The first insulating layer 510 may be formed on the entire inner surface of the housing cover 400 including the cooling channels, and may serve to provide electrical insulation in the case where the housing cover 400 and the cooling channels are made of a metallic material. The first insulating layer 510 may be generally formed of an insulating material such as polyimide, ceramic coating, or heat-resistant resin, and may have a thickness ranging from 0.1 mm to 0.5 mm to ensure heat resistance and durability.

The second insulating layer 520 may be interposed between the first insulating layer 510 and each busbar, and may serve not only to provide electrical insulation but also to perform a heat transfer function. The second insulating layer 520 may be made of an insulating material having high thermal conductivity, and may generally include a thermally conductive resin, an insulating silicone pad, a ceramic-based thermally conductive layer, or the like. In the present disclosure, the second insulating layer 520 is designed such that heat generated in the busbar may be effectively transferred to the cooling channel through the second insulating layer 520. The thermal conductivity of the second insulating layer 520 may generally be set to 1 W/m·K or higher.

In embodiments, the first insulating layer 510 may be formed as a polyimide coating layer having a thickness of 0.2 mm, and the second insulating layer 520 may be formed as an insulating silicone pad having a thermal conductivity of 3 W/m·K or higher. Furthermore, the thickness of the second insulating layer 520 may be adjusted within a range from 0.3 mm to 1.0 mm, and the second insulating layer 520 may also be formed in a multilayer structure in order to maximize heat transfer efficiency.

According to embodiments of the present disclosure, as both the first insulating layer and the second insulating layer are used, electrical insulation between the busbars and the cooling channels may be enhanced, and the heat transfer paths from the busbars to the cooling channels may also be maintained. Accordingly, the electrical safety of the secondary battery module may be improved. A short-circuit phenomenon may be prevented, and the cooling performance may also be further enhanced.

According to embodiments of the present disclosure, a plurality of secondary battery modules may be arranged in parallel, and correspondingly, a plurality of cooling channels may be formed in parallel.

Each secondary battery module may include a housing 100 that accommodates a plurality of secondary batteries 90. The secondary batteries 90 may be electrically connected by busbars 210 and 220. The secondary battery module may have an independent structure, but to implement higher output and capacity, a plurality of secondary battery modules may be arranged in parallel. The parallel arrangement may be implemented in such a way as to increase the electrical capacity, and the secondary battery pack may be configured in a form in which a plurality of secondary battery modules are assembled in parallel.

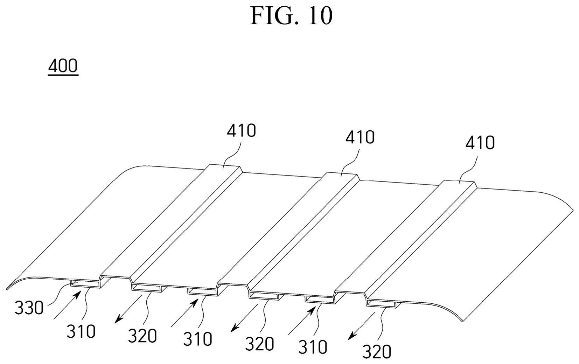

FIG. 10 is a perspective view illustrating a housing cover 400 of a secondary battery pack according to embodiments of the present disclosure.

Referring to FIG. 10, cooling channels may be integrally formed with the housing cover 400. As a plurality of secondary battery modules are arranged in parallel, a plurality of cooling channels may be formed in parallel in correspondence with the respective modules. Each cooling channel may include a cooling flow passage 330 through which a cooling fluid can flow, and may be in thermal contact with the respective busbars of the corresponding secondary battery modules, thus serving to absorb heat generated from the busbars. The plurality of cooling channels may be configured such that inlets and outlets thereof are aligned in the same direction, or the inlets and outlets are alternately arranged to form a specific fluid flow pattern. The cooling channels may be designed to maintain uniform overall cooling performance. The arrows in FIG. 10 illustrate a state in which the inlets and outlets are alternately arranged.

In embodiments, the secondary battery pack may include a plurality of secondary battery modules arranged in parallel. An individual cooling channel may be formed corresponding to each secondary battery module. The cooling channels may have the same height and width, and may be arranged at uniform intervals. In addition, cooling fluid may flow inside the cooling channels, and the plurality of cooling channels may either share a common inlet and outlet or have respective individual inlets and outlets.

Accordingly, as the plurality of secondary battery modules according to embodiments of the present disclosure are arranged in parallel, the plurality of cooling channels may be formed in parallel, thereby maintaining uniform cooling performance of the secondary battery pack. Furthermore, as each secondary battery module is configured to be independently cooled, overheating of a specific module may be prevented, and the overall performance and reliability of the battery pack may be improved. The foregoing configuration may maintain a stable temperature distribution even during prolonged use and increase the durability of the secondary battery pack.

As described above, in the secondary battery module according to embodiments of the present disclosure, the cooling channels may be integrally formed with the housing cover, thereby enabling effective management of heat generated from the busbars without the need for an additional cooling component. The foregoing configuration may implement structural simplification of the system, reduce the number of components, and achieve reduction in production cost and weight. Furthermore, as the integrated cooling channel is used, cooling efficiency may be improved and the reliability of the battery module may be enhanced.

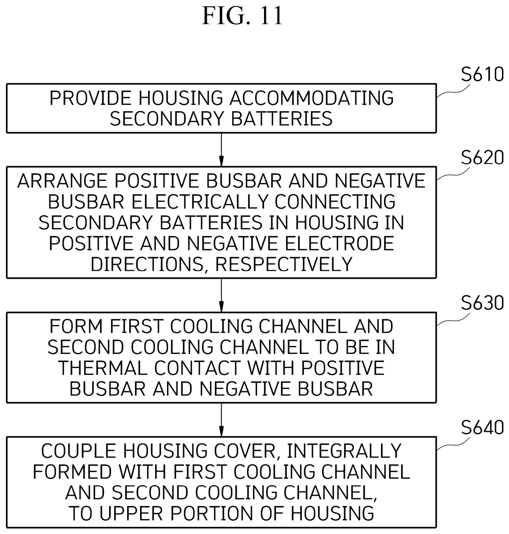

FIG. 11 is a flowchart for describing a method of manufacturing a secondary battery module according to embodiments of the present disclosure.

Referring to FIG. 11, a method of manufacturing a secondary battery module according to embodiments of the present disclosure includes step S610 of providing a housing configured to accommodate a plurality of secondary batteries, step S620 of arranging busbars that electrically connect the plurality of secondary batteries in the housing, step S630 of forming a first cooling channel and a second cooling channel that are in thermal contact with the busbars, and step S640 of coupling a housing cover, integrally formed with the first cooling channel and the second cooling channel, to an upper portion of the housing.

In step S610 of providing the housing configured to accommodate the plurality of secondary batteries according to embodiments of the present disclosure, the housing may include a structure in which the plurality of secondary batteries may be arranged, and may function to protect battery cells from external impacts and secure internal components in place. The housing may be made of an aluminum alloy, high-strength plastic, or a composite material, and may include a plurality of accommodation spaces therein.

Step S620 of arranging the busbars that electrically connect the plurality of secondary batteries in the housing according to embodiments of the present disclosure may include a process of performing wiring such that the plurality of secondary batteries are connected in series or in parallel. The busbars may respectively electrically connect the positive electrodes and the negative electrodes of the secondary batteries, and may be made of metal such as copper, aluminum, or nickel-plated metal, which generally has excellent electrical conductivity. The busbars may be respectively connected to the positive tabs and negative tabs of the secondary batteries, and may be arranged to allow current to flow smoothly.

Step S630 of forming the first cooling channel and the second cooling channel that are in thermal contact with the busbars according to embodiments of the present disclosure may include a process of fabricating a cooling structure configured to effectively dissipate heat generated from the secondary batteries. The cooling channels may be formed on the lower portion of the housing cover, and may be designed to allow cooling fluid to flow therein. The cooling fluid may include water, cooling oil, or refrigerant, and may circulate within the cooling channels to remove heat generated from the busbars. The cooling channels may be made of metal or a composite material having high conductivity.

As such, according to embodiments of the present disclosure, a secondary battery module and a secondary battery pack capable of optimizing both electrical connection and cooling performance may be implemented by providing the housing that accommodates the plurality of secondary batteries, arranging the busbars, forming the first cooling channel and the second cooling channel that are in thermal contact with the busbars, and assembling the housing cover integrally formed with the cooling channels.

The above-mentioned secondary battery module and method of manufacturing the secondary battery pack according to embodiments of the present disclosure have been described with reference to the flowchart shown in the drawing. For brief explanation, the method has been illustrated and described as a series of blocks, but the present disclosure is not limited to the order of the blocks. In other words, some blocks may be executed simultaneously with other blocks or in a different order from those illustrated and described in this specification, and various diverges, flow paths, block sequences may also be implemented if they give the equivalent or similar results. In addition, to implement the method described in the specification, it is also possible not to demand all blocks.

In the description with reference to FIG. 11, each step may be further divided into additional steps, or some steps may be combined as fewer steps, based on implementation embodiments of the present disclosure. Furthermore, some steps may be omitted as needed, and a sequence of steps may be changed. In addition, despite other omitted description, the description provided with reference to FIGS. 1 to 10 may be applied to the description provided with reference to FIG. 11. Moreover, the description provided with reference to FIG. 11 may be applied to the description provided with reference to FIGS. 1 to 10.

Hereinafter, materials which may be used in a secondary battery according to an embodiment of the present disclosure are described.

A compound (e.g., a lithiated intercalation compound) capable of reversible intercalation and deintercalation of lithium may be used as a positive electrode active material. Specifically, one type or more selected among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material, and may further include a binder and/or a conductive material.

Content of the positive electrode active material may be 90 wt.% to 99.5 wt.% with respect to the positive electrode active material layer 100 wt.%. Content of the binder and the conductive material may be 0.5 wt.% to 5 wt.% with respect to the positive electrode active material layer 100 wt.%.

Al may be used as the current collector, but the present disclosure may not be limited thereto.

A negative electrode active material may include a material capable of reversibly Intercalation/de-intercalation with respect to lithium ions, lithium metal, an alloy of lithium metal, a material capable of doping and dedoping with respect to lithium, or transition metal oxide.

The material capable of reversibly Intercalation/de-intercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination of them.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material, and may further include a binder and/or a conductive material.

For example the negative electrode active material layer may include the negative electrode active material of 90 wt.% to 99 wt.%, the binder of 0.5 wt.% to 5 wt.%, and the conductive material of 0 wt.% to 5 wt.%.

A nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity.

One selected among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a nonaqueous organic solvent and lithium salts.

The nonaqueous organic solvent may play a role as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination of them. The carbonate-based, ester-based, ether-based, ketone-based, or alcohol-based solvent, or the aprotic solvent may be used solely, or two types or more of them may be mixed and used as the nonaqueous organic solvent.

Furthermore, if the carbonate-based solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers of them may be used as the separator.

The separator may include a porous base, and a coating layer including an organic matter, an inorganic matter, or a combination of them that is disposed on one or both sides of the porous base.

The organic matter may include a polyvinylidene fluoride-based heavy antibody or (meth)acrylic polymer.

The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination of them, but the present disclosure is not limited thereto.

The organic matter and the inorganic matter may have a form in which the organic matter and the inorganic matter have been mixed in one coating layer or a form in which a coating layer including the organic matter and a coating layer including the inorganic matter have been stacked.

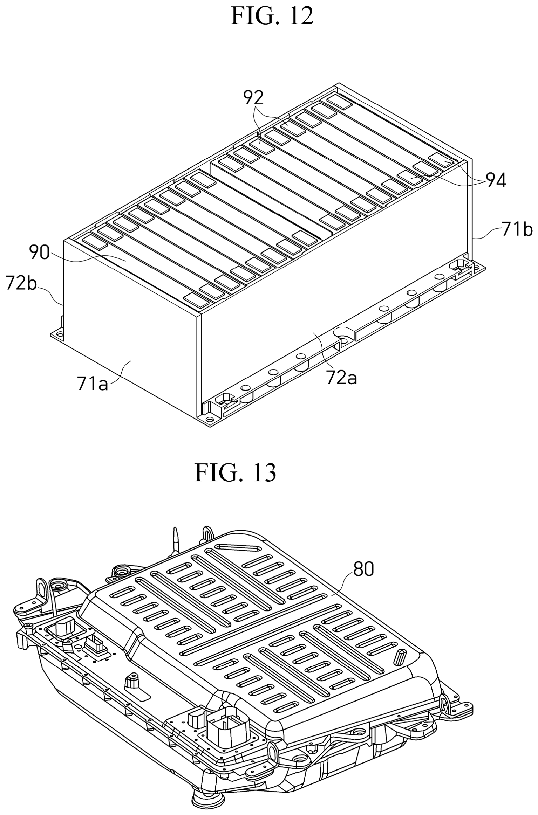

FIG. 12 is an exemplary diagram of a secondary battery module in which the secondary batteries illustrated in FIGS. 3 to 10 have been arranged according to an embodiment of the present disclosure. The secondary battery module may be manufactured by arranging and connecting multiple secondary battery cells laterally and/or longitudinally as the capacity of a secondary battery for driving an electric vehicle is increased.

Multiple secondary batteries may be arranged in a space that is formed by a pair of end plates 71a and 71b that face each other and a pair of side plates 72a and 72b that face each other. A direction in which the secondary batteries are arranged and the number of secondary batteries may be designed so that desired voltage and current specifications are obtained.

FIG. 13 is an exemplary diagram of a secondary battery pack 80 that has been constructed to apply the secondary battery module illustrated in FIG. 12 to an actual product (e.g., a vehicle).

The secondary battery pack may be manufactured by embedding multiple secondary battery modules in a pack housing having a form designed to mount the secondary battery pack on an actual product. The pack housing may include a fastening part that is necessary for the mounting of the secondary battery pack on the product and an electricity withdrawing part. Related elements, such as a bus bar for an electrical connection of secondary batteries, a cooling unit, and an external terminal, are not illustrated in FIG. 13, for convenience sake.

The secondary battery pack may be mounted on a vehicle. The vehicle may be an electric vehicle, a hybrid vehicle, or a plug-in hybrid vehicle, for example. The vehicle may include a four-wheel or two-wheel drive vehicle.

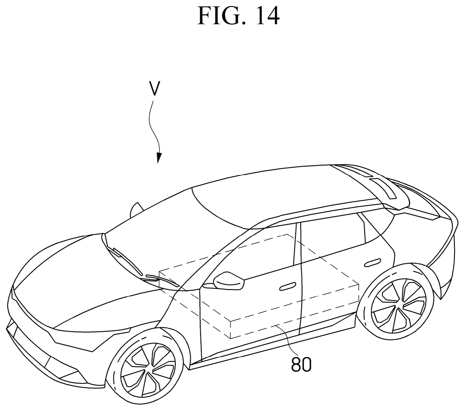

FIG. 14 is a diagram for describing a vehicle including the secondary battery pack illustrated in FIG. 13. FIG. 14 illustrates that the secondary battery pack 80 according to an embodiment of the present disclosure has been mounted on a lower part of the vehicle body of a vehicle V. The vehicle V may operate by being supplied with power from the secondary battery pack 80 according to an embodiment of the present disclosure.

Although the present disclosure has been described above in connection with the limited embodiments and drawings, the present disclosure is not limited to the embodiments. A person having ordinary knowledge in the art to which the present disclosure pertains may modify and change the present disclosure within the range of the following claims.

## Claims

1. A secondary battery module, comprising:
a housing (100) configured to accommodate a plurality of secondary batteries (90);
busbars (210, 220) configured to electrically connect the plurality of secondary batteries (90) in the housing (100);
a first cooling channel (310) and a second cooling channel (320) formed to come into thermal contact with the respective busbars (210, 220) and configured to absorb heat from the busbars; and
a housing cover (400) integrally formed with the first cooling channel (310) and the second cooling channel (320), and configured to cover an upper portion of the housing (100).

2. The secondary battery module as claimed in claim 1, wherein each of the first and second cooling channels (310, 320) is formed by a rib structure protruding from a lower portion of the housing cover.

3. The secondary battery module as claimed in claim 1 or claim 2, wherein each of the first and second cooling channels includes a cooling flow passage (330) configured for flowing a cooling fluid.

4. The secondary battery module as claimed in claim 3, wherein the first cooling channel (310) and the second cooling channel (320) comprise respective inlets and respective outlets that are alternately arranged.

5. The secondary battery module as claimed in any one of claims 1 to 4, wherein the housing cover (400) comprises at least one tunnel portion (410) bent outward.

6. The secondary battery module as claimed in claim 5, wherein the tunnel portion (410) is formed above a cell vent region (96) in the housing (100), and forms a space between the cell vent region (96) and the housing cover (400).

7. The secondary battery module as claimed in claim 5 or claim 6, wherein the tunnel portion (410) is formed between the first cooling channel (310) and the second cooling channel (320), and includes a side portion formed to be inclined.

8. The secondary battery module as claimed in any one of claims 1 to 7, wherein the busbars and the first and second cooling channels (310, 320) include an insulator configured to provide electrical insulation therebetween.

9. The secondary battery module as claimed in claim 8, wherein the insulator comprises a first insulating layer (510) formed on an entire inner surface of the housing cover (400) including the first and second cooling channels (310, 320), and a second insulating layer (520) formed between the first insulating layer (510) and the busbars (210, 220) and made of a heat transfer material.

10. A secondary battery pack comprising
a plurality of secondary battery modules claimed in any one of claims 1 to 9 and arranged in parallel, and
a plurality of cooling channels arranged in parallel in correspondence with the plurality of secondary battery modules.

11. A method of manufacturing a secondary battery module, comprising:
providing a housing (100) that accommodates a plurality of secondary batteries (90);
arranging busbars (210, 220) that electrically connect the plurality of secondary batteries (90) in the housing (100);
forming a first cooling channel (310) and a second cooling channel (320) that are in thermal contact with the respective busbars (210, 220); and
coupling a housing cover (400) to an upper portion of the housing (100), the housing cover (400) being integrally formed with the first cooling channel (310) and the second cooling channel (320).

12. The method as claimed in claim 11, wherein each of the first and second cooling channels (310, 320) is formed using a rib structure protruding from a lower portion of the housing cover (400).

13. The method as claimed in claim 11 or claim 12, wherein each of the first and second cooling channels (310, 320) includes a cooling flow passage (330) through which cooling fluid flows.

14. The method as claimed in any one of claims 11 to 13, wherein the forming of the first cooling channel (310) and the second cooling channel (320) comprises forming the first cooling channel and the second cooling channel such that respective inlets and respective outlets are alternately arranged.

15. The method as claimed in any one of claims 11 to 14, further comprising forming the housing cover (400) such that at least one tunnel portion (410) bent outward is included in the housing cover.
